# EUROPÄISCHE PATENTANMELDUNG

(11) **EP 1 582 798 A1**
(43) Veröffentlichungstag der Anmeldung: **05.10.2005**
(21) Anmeldenummer: 05003554.2
(22) Anmeldetag: 18.02.2005
(51) Int. Cl.: F16L 21/00, F16L 25/12

(54) **Rohrverbindungsvorrichtung**

(30) Priorität: 24.02.2004 DE 102004008983
(71) Anmelder: Messerschmidt, Frank, 72393 Burladingen (DE); Messerschmidt, Michel, 72393 Burladingen (DE)
(72) Erfinder: Messerschmidt, Friedrich, 72393 Burladingen (DE)

(57) **Zusammenfassung**

Eine Rohrverbindungsvorrichtung (12) mit einer in die Enden (10.1, 11.1) der zu verbindenden Rohre (10, 11) einführbaren Muffe (13), wobei die Muffe (13) durch Kraft- und/oder Formschluss an der Innenwand (10.2, 11.2) der Rohrenden (10.1, 11.1) verankerbar ist.

## Beschreibung

Aus der DE 102 550 073 des Anmelders ist eine Vorrichtung zum Verbinden von Aluminium-Profilrohren zur Führung von Fluiden bekannt, bei der die beiden Aluminiumrohre durch eine Verbindungsvorrichtung, die die Trennebene zwischen den Rohrenden auf der Außenseite der Rohre überbrückt, verbunden werden.

Die Verbindungsvorrichtung wird mit Spannbacken formschlüssig an den Rohraußenseiten befestigt. Die Rohraußenseiten sind hierzu profiliert, sodass die formschlüssige Verbindung der Verbindungsvorrichtung mit den Rohrenden gewährleistet ist.

Die bekannte Vorrichtung eignet sich somit nur für Rohre mit einer entsprechenden Profilierung der Außenseite. Zudem ist die Verwendung von Spannbacken zur Befestigung eine relativ aufwendige Lösung.

Der vorliegenden Erfindung liegt die Aufgabe zugrunde, eine preisgünstige Verbindungsvorrichtung für Rohre zur Führung von Fluiden aller Art auch ohne eine Profilierung der Rohraußenseiten bereitzustellen.

Die Aufgabe wird mit einer Rohrverbindungsvorrichtung mit einer in die Enden der zu verbindenden Rohre einführbaren Muffe gelöst, wobei die Muffe durch Kraft- und/oder Formschluss an der Innenwand der Rohrenden verankerbar ist.

Bei dieser Rohrverbindungsvorrichtung kommt es also nicht darauf an, wie die Außenseiten der Rohre gestaltet sind. Die Verbindungsvorrichtung eignet sich somit für sämtliche Rohrtypen. Es muss lediglich sichergestellt werden, dass die in die Rohrenden eingeführte Muffe den Fluidtransport durch die Rohre nicht behindert, was durch eine entsprechende Gestaltung der Muffe erreicht werden kann.

Bei einer bevorzugten Ausgestaltung kann die Muffe mittels mindestens je eines radial nach außen bewegbaren Befestigungselements in den Rohrenden verankerbar sein. Die Muffe wird dann zunächst mit den Befestigungselementen in die Rohrenden eingeschoben, bevor die Befestigungselemente radial nach außen bewegt werden, wodurch der Kraft- und/oder Formschluss mit der Innenwand der Rohrenden entsteht.

Die Befestigungselemente können dabei auf dem Muffenumfang sitzende, mit einem radialen Schlitz versehene Ringe sein. Diese geschlitzten Ringe lassen sich durch Aufweiten radial nach außen bewegen und mit der Innenwand der Rohrenden verspannen. Dabei ist es vorteilhaft, wenn die Befestigungselemente mindestens einen radial vorspringenden, sich in die Innenwand der Rohrenden eingrabenden Abschnitt aufweisen, sodass ein Formschluss zwischen den Befestigungselementen und der Innenwand der Rohrenden entsteht.

Zur radialen Aufweitung der Befestigungselemente sind verschiedene Konstruktionen denkbar. Bei einer besonders einfachen Ausgestaltung können die Befestigungselemente jeweils mittels eines sich konisch erweiternden Umfangsbereichs der Muffe radial aufweitbar sein, bis sie kraft- und/oder formschlüssig an der Innenwand der Rohrenden anliegen. Dieser sich konisch erweiternde Umfangsbereich kann integraler Bestandteil der Muffe sein oder aber auch von einer auf der Muffe sitzenden Hülse gebildet sein.

Damit dieser sich konisch erweiternde Umfangsbereich wirksam wird, kann die Muffe mittels an den Stirnseiten der Rohrenden angreifender Verstellelemente axial in den Rohrenden bewegbar sein, sodass die sich konisch erweiternden Umfangsbereiche der Muffe die Befestigungselemente radial nach außen bewegen oder aufweiten können. Als Verstellelemente kommen beispielsweise Muttern infrage, die auf einem mittleren Außengewindebereich der Muffe aufgeschraubt sind. Aber auch andere Verstellelemente wie Schieber oder dergleichen sind denkbar.

Um zu verhindern, dass die Befestigungselemente beim axialen Verschieben der Muffe durch den sich konisch erweiternden Umfangsbereich sich ebenfalls axial mitbewegen anstatt radial aufgeweitet zu werden, können zwischen den Verstellelementen und den Befestigungselementen Hülsen angeordnet sein, die Anschlagsflächen zu den Verstellelementen und den Befestigungselementen aufweisen. Hierdurch werden die Befestigungselemente bei der axialen Verschiebung der Muffe an Ort und Stelle innerhalb der Rohrenden gehalten oder ggf. sogar entgegen der Bewegungsrichtung der Muffe bewegt. Dadurch kann ein sicheres radiales Aufspreizen der Befestigungselemente sichergestellt werden.

Die Hülsen können separate Elemente sein oder aber auch einstückig mit den Befestigungselementen ausgebildet sein.

Es ist auch möglich, die Befestigungselemente unter Überwindung eines Reibwiderstandes gemeinsam mit der Muffe in die Rohrenden einzuführen. Bei einer solchen Ausgestaltung der Befestigungselemente kann die Reibung zwischen den Befestigungselementen und der Innenwand der Rohrenden ausreichen, um das sichere radiale Aufspreizen zu garantieren. Es kann dann auf das Vorsehen von Hülsen auch verzichtet werden. Das Einführen der Befestigungselemente kann dadurch erleichtert werden, dass die Befestigungselemente radial komprimierbar sind und dazu beispielsweise einen axial vorstehenden Kragen aufweisen, der mit den Fingern erfasst und zusammengedrückt werden kann. Dadurch können die Bewegungselemente mit der Muffe in die Rohrenden eingeführt werden. Anschließend legen sie sich gegen die Innenwand der Rohrenden und werden zusätzlich radial aufgespreizt, um den Kraft- und/oder Formschluss mit der Innenwand der Rohrenden herzustellen.

Insbesondere, wenn ein Formschluss zwischen den Befestigungselementen und der Innenwand der Rohrenden angestrebt wird, ist es von Vorteil, wenn die Befestigungselemente mindestens bereichsweise aus einem härteren Material als die Rohrenden gefertigt sind. Sie graben sich dann leichter in das Material der Rohrenden ein.

Es ist nicht unbedingt erforderlich, dass die Befestigungselemente gleichzeitig die Muffe gegen die Rohrenden abdichten. Hierzu können auch zwischen der Muffe und der Innenwand der Rohrenden zusätzlich Dichtelemente eingesetzt sein.

Die erfindungsgemäße Rohrverbindungsvorrichtung eignet sich nicht nur für gerade Verbindungen, sondern auch für Eckverbindungen oder T-Verbindungen oder auch Kreuzverbindungen. Die Muffe kann dazu gerade, gebogen, T- oder kreuzförmig ausgestaltet sein. Dabei kann die Muffe auch mit Fittings kombiniert werden.

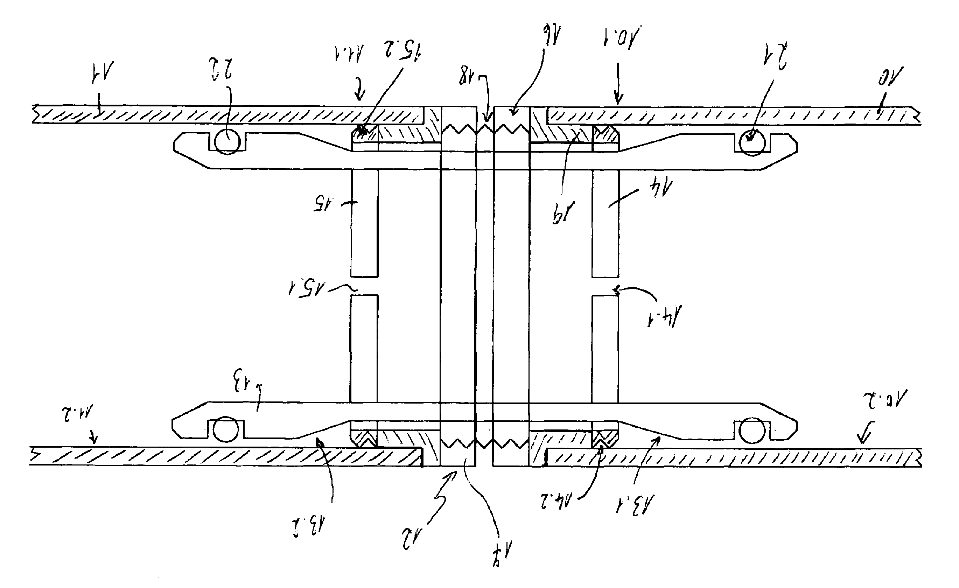

Nachfolgend wird ein bevorzugtes Ausführungsbeispiel einer erfindungsgemäßen Rohrverbindung anhand der Zeichnung näher beschrieben.

Die einzige Figur zeigt einen Längsschnitt durch einen Verbindungsbereich zweier Rohre 10, 11 mit einer erfindungsgemäßen Rohrverbindungsvorrichtung 12. Die Rohrverbindungsvorrichtung 12 weist eine Muffe 13 auf, die in die Endbereiche 10.1 und 11.1 der beiden Rohre 10 und 11 eingeschoben ist. Auf der Muffe 13 sitzen zwei Befestigungselemente 14 und 15 in Form von mit einem radialen Schlitz 14.1, 15.1 versehenen Ringen. Mit Hilfe dieser Ringe 14, 15 kann die Muffe 13 kraft- und/oder formschlüssig mit der Innenwand 10.2, 11.2 der Rohre 10 und 11 verbunden werden, wodurch die Rohre 10 und 11 sicher aneinander gehalten werden. Diese kraft- und/oder formschlüssige Verbindung kann dadurch hergestellt werden, dass die geschlitzten Ringe 14 und 15 radial aufgeweitet werden. Hierzu weist die Muffe 13 an ihrem äußeren Umfang sich konisch erweiternde Umfangsbereiche 13.1 und 13.2 auf. Wird die Muffe 13 jeweils in axialer Richtung in rohrauswärts bewegt, so greifen die konischen Bereich 13.1 und 13.2 am Innenumfang der Ringe 14 und 15 an und weiten diese radial auf.

Die Ringe 14 und 15 sind an ihrem äußeren Umfang mit vorspringenden Abschnitten 14.2, 15.2 versehen, die sich bei einem radialen Aufweiten der Ringe 14 und 15 in die Innenwände 10.2 und 11.2 der Rohre 10 und 11 eingraben, sodass zusätzlich zum Kraft- ein Formschluss entsteht. Zur axialen Verschiebung der Muffe 13 rohrauswärts sind zwei Verstellelemente 16, 17 in Form von Spannmuttern vorgesehen, die auf einem Außengewindebereich 18 der Muffe 13 aufgeschraubt sind. Durch Drehen der Muttern 16, 17 wird die Muffe 13 etwas aus den Rohrenden 10.1, 11.1 herausgezogen. Zwischen den Muttern 16, 17 und den Befestigungselementen 14, 15 angeordnete Hülsen 19, 20, die sowohl an den Muttern 16, 17 als auch an den Ringen 14, 15 anliegen, sorgen dafür, dass beim Auswärtsbewegen der Muffe 13 aus den Rohrenden 10.1, 11.1 sich die Ringe 14, 15 nicht mit bewegen. Dadurch ist sichergestellt, dass die konischen Bereiche 13.1, 13.2 der Muffe 13 am inneren Umfang der Ringe 14, 15 angreifen und diese dadurch radial aufweiten können, sodass der gewünschte Kraft- und/oder Formschluss zwischen den Ringen 14, 15 und den Rohren 10, 11 entsteht.

Zur Abdichtung der Rohrverbindungsvorrichtung 12 sind zwischen der Muffe 13 und den Rohrenden 10.1 und 11.1 O-Ringe 21, 22 angeordnet.

In den Rohren 10 und 11 können Fluide aller Art bei Normaldruck, Überdruck oder Unterdruck geführt werden. Die erfindungsgemäße Rohrverbindungsvorrichtung 12 hält außerdem durch Druckschwankungen ausgelösten Stoßbelastungen Stand.

Mit der erfindungsgemäßen Rohrverbindungsvorrichtung 12 lassen sich nicht nur gerade Rohrverbindungen, wie in der Zeichnung dargestellt, herstellen, sondern auch Eckverbindungen, T-Verbindungen oder Kreuzverbindungen von Rohren. Die Muffen können dazu entsprechend gerade, gebogen oder T- bzw. kreuzförmig ausgebildet sein.

## Patentansprüche

1. Rohrverbindungsvorrichtung mit einer in die Enden (10.1, 11.1) der zu verbindenden Rohre (10, 11) einführbaren Muffe (13), wobei die Muffe (13) durch Kraft- und/oder Formschluss an der Innenwand (10.2, 11.2) der Rohrenden (10.1, 11.1) verankerbar ist.

2. Rohrverbindungsvorrichtung nach Anspruch 1, **dadurch gekennzeichnet, dass** die Muffe (13) mittels mindestens je eines radial nach außen bewegbaren Befestigungselements (14, 15) in den Rohrenden (10.1, 11.1) verankerbar ist.

3. Rohrverbindungsvorrichtung nach Anspruch 2, **dadurch gekennzeichnet, dass** die Befestigungselemente (14, 15) auf dem Muffenumfang sitzende, mit einem radialen Schlitz (14.1, 15.1) versehene Ringe sind.

4. Rohrverbindungsvorrichtung nach Anspruch 2 oder 3, **dadurch gekennzeichnet, dass** die Befestigungselemente (14, 15) mindestens einen radial vorspringenden, sich in die Innenwand (10.2, 11.2) der Rohrenden (10.1, 11.1) eingrabenden Abschnitt (14.2, 15.2) aufweisen.

5. Rohrverbindungsvorrichtung nach einem der Ansprüche 2 bis 4, **dadurch gekennzeichnet, dass** die Befestigungselemente (14, 15) jeweils mittels eines sich konisch erweiternden Umfangsbereichs (13.1, 13.2) der Muffe (13) radial aufweitbar sind, bis sie kraft- und/oder formschlüssig an der Innenwand (10.2, 11.2) der Rohrenden (10.1, 11.1) anliegen.

6. Rohrverbindungsvorrichtung nach Anspruch 5, **dadurch gekennzeichnet, dass** die konischen Umfangsbereiche (13.1, 13.2) von einer auf der Muffe (13) sitzenden Hülse gebildet werden.

7. Rohrverbindungsvorrichtung nach Anspruch 5 oder 6, **dadurch gekennzeichnet, dass** die Muffe (13) mittels an den Stirnseiten der Rohrenden (10.1, 11.1) angreifender Verstellelemente (16, 17) axial in den Rohrenden (10.1, 11.1) bewegbar ist, sodass die sich konisch erweiternden Umfangsbereiche (13.1, 13.2) der Muffe (13) die Befestigungselemente (14, 15) radial nach außen bewegen oder aufweiten können.

8. Rohrverbindungsvorrichtung nach Anspruch 7, **dadurch gekennzeichnet, dass** die Verstellelemente (16, 17) Muttern sind, die auf einem mittleren Außengewindebereich (18) der Muffe (13) aufgeschraubt sind.

9. Rohrverbindungsvorrichtung nach Ansprüche 7 oder 8, **dadurch gekennzeichnet, dass** zwischen den Verstellelementen (16, 17) und den Befestigungselementen (13, 14) Hülsen (19, 20) angeordnet sind, die Anschlagflächen zu den Verstellelementen (16, 17) und dem Befestigungselementen (14, 15) aufweisen.

10. Rohrverbindungsvorrichtung nach Anspruch 9, **dadurch gekennzeichnet, dass** die Hülsen (19, 20) und die Befestigungselemente (14, 15) einteilig ausgebildet sind.

11. Rohrverbindungsvorrichtung nach einem der Ansprüche 2 bis 10, **dadurch gekennzeichnet, dass** die Befestigungselemente (14, 15) unter Überwindung eines Reibwiderstandes gemeinsam mit der Muffe (13) in die Rohrenden (10.1, 11.1) einführbar sind.

12. Rohrverbindungsvorrichtung nach Anspruch 11, **dadurch gekennzeichnet, dass** die Befestigungselemente 14, 15 zum leichteren Einführen in die Rohrenden (10.1, 11.1) radial komprimierbar sind.

13. Rohrverbindungsvorrichtung nach einem der Ansprüche 2 bis 12, **dadurch gekennzeichnet, dass** die Befestigungselemente (14, 15) mindestens bereichsweise aus einem härteren Material als die Rohrenden (10.1, 11.1) gefertigt sind.

14. Rohrverbindungsvorrichtung nach einem der Ansprüche 1 bis 13, **dadurch gekennzeichnet, dass** zwischen der Muffe (13) und der Innenwand (10.2, 11.2) der Rohrenden (10.1, 11.1) Dichtelemente (21, 22) eingesetzt sind.

15. Rohrverbindungsvorrichtung nach einem der Ansprüche 1 bis 14, **dadurch gekennzeichnet, dass** die Muffe (13) gerade, gebogen oder T- oder kreuzförmig ausgebildet ist.
